# EUROPEAN PATENT APPLICATION

(11) **EP 2 141 642 A2**
(43) Date of publication of application: **06.01.2010**
(21) Application number: 09163794.2
(22) Date of filing: 25.06.2009
(51) Int. Cl.: G06Q 10/00

(54) **Service oriented architecture based decision support system**

(30) Priority: 30.06.2008 US 165480
(71) Applicant: Honeywell International Inc., Morristown, NJ 07962 (US)
(72) Inventor: Ramanathan, Jijji, Morristown, NJ 07962-2245 (US); Iyer, Vidhyashankaran Ramamoorthy, Morristown, NJ 07962-2245 (US); Nwadiogbu, Emmanuel Obiesie, Morristown, NJ 07962-2245 (US); Nunn, Larry J., Morristown, NJ 07962-2245 (US); Menon, Sunil, Morristown, NJ 07962-2245 (US)
(74) Representative: Buckley, Guy Julian

(57) **Abstract**

A service oriented architecture (SOA) based decision support system for a vehicle is provided. A database is provided for storing a workplan of the vehicle. A webservice provider is in communication with the database for integrating applications using a variety of open standards of an internet protocol backbone. A core is connected between the database and webservice provider. The core is adapted for analyzing fault conditions, creating the workplan to overcome the fault conditions, and generating a response for a webservice request. An enterprise service bus is connected to the webservice provider for providing loose connectivity between webservice enabled functions, a service customer, and the core.

## Description

### CROSS-REFERENCE TO RELATED APPLICATIONS

This application is related to U.S. Non-Provisional Applications No. 12/165,503, and 12/165,455 filed concurrently herewith and incorporated herein by reference.

### FIELD OF THE INVENTION

The present invention generally relates to vehicle systems, and more particularly, but not exclusively, to a service-oriented architecture (SOA)-based decision support system (DSS) for vehicles.

### BACKGROUND OF THE INVENTION

Vehicles are used in a variety of settings. For example, aircraft and spacecraft are used in aerospace settings, automobiles, buses, and trains are used in surface settings, and marine vehicles are used on or in marine environments. Telematics, or the integrated use of telecommunications and informatics, also known as information and communications technology (ICT), has become more prevalently used and more important to users and operators of vehicles.

For example, telematics systems may be used as part of automotive navigation systems, logistics, safety communications, and the like. In some cases, a problem may arise that may require troubleshooting and, perhaps, repair of the vehicle. Currently, portions of telematics systems may be used to assist in vehicle health maintenance (troubleshooting and repair). However, these systems in many cases may not be fully integrated. In addition, the systems may not be compatible across a wide variety of platforms and implementations. Finally, the systems may not interface externally with applications or services, or may lack the intelligence to render appropriate advice to a user or operator of the vehicle.

Accordingly, a need exists for an architecture for vehicle health maintenance to help alleviate the current issues described above. Furthermore, other desirable features and characteristics of the present invention will become apparent from the subsequent detailed description of the invention and the appended claims, taken in conjunction with the accompanying drawings and this background of the invention.

### BRIEF SUMMARY OF THE INVENTION

In one embodiment, by way of example only, a service oriented architecture (SOA) based decision support system for a vehicle is provided. A database is provided for storing a workplan of the vehicle. A webservice provider is in communication with the database for integrating applications using a variety of open standards of an internet protocol backbone. A core is connected between the database and webservice provider. The core is adapted for analyzing fault conditions, creating the workplan to overcome the fault conditions, and generating a response for a webservice request. An enterprise service bus is connected to the webservice provider for providing loose connectivity between webservice enabled functions, a service customer, and the core.

In another embodiment, again by way of example only, a method for implementing a service oriented architecture (SOA) based decision support system for a vehicle is provided. A database is configured for storing a workplan of the vehicle. A webservice provider in communication with the database is configured for integrating applications using a variety of open standards of an internet protocol backbone. A core connected between the database and webservice provider is configured. The core is adapted for analyzing fault conditions, creating the workplan to overcome the fault conditions, and generating a response for a webservice request. An enterprise service bus connected to the webservice provider is configured for providing loose connectivity between webservice enabled functions, a service customer, and the core.

In still another embodiment, again by way of example only, a computer program product for implementing a service oriented architecture (SOA) based decision support system for a vehicle is provided, the computer program product comprising a computer-readable storage medium having computer-readable program code portions stored therein,. The computer-readable program code portions include a first executable portion for configuring a database for storing a workplan of the vehicle, a second executable portion for configuring a webservice provider in communication with the database for integrating applications using a variety of open standards of an internet protocol backbone, a third executable portion for configuring a core connected between the database and webservice provider. The core is adapted for analyzing fault conditions, creating the workplan to overcome the fault conditions, and generating a response for a webservice request. Finally, the computer-readable program code portions comprise a fourth executable portion for configuring a enterprise service bus connected to the webservice provider for providing loose connectivity between webservice enabled functions, a service customer, and the core.

### BRIEF DESCRIPTION OF THE DRAWINGS

The present invention will hereinafter be described in conjunction with the following drawing figures, wherein like numerals denote like elements, and

FIG. 1 illustrates an exemplary webservice architecture for vehicle health maintenance;

FIG. 2 illustrates an exemplary communications interaction between a webservice architecture and service oriented architecture (SOA);

FIG. 3 illustrates an exemplary method of configuring a service oriented architecture for operation;

FIG. 4 illustrates an exemplary method of operation of a webservice architecture for vehicle health maintenance; and

FIG. 5 illustrates an exemplary method for instantiating a meta model in a decision support system (DSS) for troubleshooting purposes.

### DETAILED DESCRIPTION OF THE INVENTION

The following detailed description of the invention is merely exemplary in nature and is not intended to limit the invention or the application and uses of the invention. Furthermore, there is no intention to be bound by any theory presented in the preceding background of the invention or the following detailed description of the invention.

The present description and following claimed subject matter present exemplary system, method, and computer program product embodiments of a mechanism to implement and operate a webservice architecture for vehicle health maintenance. In some embodiments, the webservice architecture may be implemented in conjunction with a service-oriented architecture (SOA) for vehicle telematics platforms. The webservice architecture in conjunction with the SOA act as an integrated decision support system (DSS) for the vehicle. The DSS, at least partially, functions as a communications network. An enterprise service bus (ESB) is integrated into the DSS to provide interconnection with external services and functions. The DSS provided an association of recommended repair actions and/or parts and/or troubleshooting procedures for a received webservice request.

In one exemplary embodiment within an aircraft vehicle setting, the DSS may be implemented to support aircraft maintenance personnel with necessary troubleshooting instructions on a remote basis. Such a scenario may reduce the operating cost of the aircraft.

The DSS may be adapted to follow "webservice"-based communications with the ESB in order to maintain loose coupling, platform independency, and flexibility while interfacing with other services and functions. The applications of webservice-based functionality will be further described below. The DSS may also be adapted to analyze the conditions received from the ESB before processing on the data using onboard decision-making intelligence. This intelligence is facilitated by the inclusion of a DSS core module. The DSS core module may be adapted to perform a variety of specific and flexible functionality. Such functionality will also be further described, following. The DSS includes well-defined webservices functions. The DSS may be accessed by any service that is compliant with a web services description language (WSDL), an extensible markup language (XML)-based definitional language.

The DSS may define a formal contract to separate functionality provided from the DSS from its technical implementation. Other ESB can interact through the DSS by use of this formal contract. DSS may be defined at a level of abstraction that corresponds to real world business activities. This abstraction assists component-level security, and enables loose coupling between the DSS and vehicle services and functions. Architecture 10 is designed to be platform independent with other vehicle services and functions.

The DSS avoids letting legacy systems and implementation details dictate services and service requests. Instead, the DSS may be configured to perform discrete tasks and provide simple interfaces to access their functionality, encouraging reuse and loose coupling between the DSS and other applications and functions.

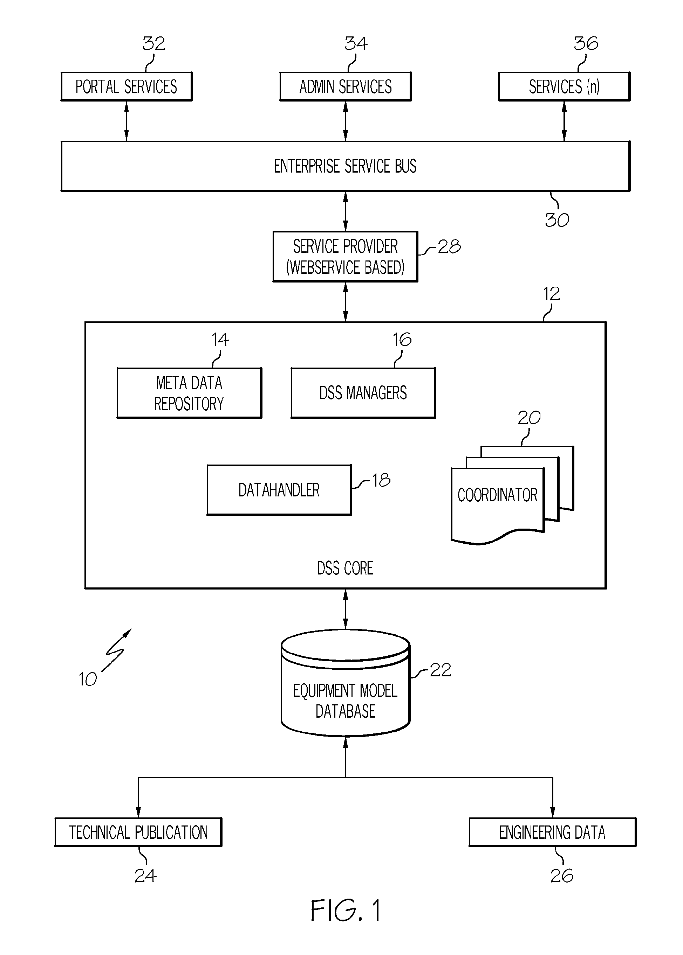

Turning to FIG. 1, an exemplary webservice architecture 10 for vehicle health maintenance is illustrated. Architecture 10 includes a DSS core module 12. Core module 12 includes a number of subcomponents in communication with the core module 12, including a metadata repository 14, DSS managers 16, a data handler 18, and a coordinator 20. While the subcomponents are illustrated as integrated into the core module 12, the skilled artisan will appreciate that the subcomponents may be located elsewhere as part of the architecture 10, while still in communication with the core 12. For example, the data handler 18 may be integrated into the database 22, or elsewhere.

DSS core module 12 incorporates decision-making intelligence to create a workplan to overcome faults of the vehicle that may occur from time to time. The decision-making intelligence may include a set of expected fault conditions. The expected fault conditions may include information and related data such as raw fault conditions, grouped fault conditions, equipment details and downloaded file stamp or time stamp information. As part of a constructed work plan, the core module 12 may recommend a specific part replacement, test procedure, or repair action.

DSS core module 12 is implemented between a webservice-based service provider 28 and an equipment model database 22. The DSS core module 12 may be adapted to reroute requests from the service provider 28 to the DSS managers 16. The DSS managers 16 may include a workplan manager, a fault model manager, and an equipment manager. Each of the various DSS managers 16 may be implemented to support functions such as workplan management (performed by the workplan manager), fault model management (performed by the fault model manager), and equipment configuration management (provided by the equipment manager).

The metadata repository 14 functions to store metadata relating to equipment data and relationships, and will be further described. The coordinator 20 provides decision-making functionality to encapsulate algorithms that classify fault conditions and identify troubleshooting procedures. Data handler 18 may extract or construct various data structures based on a particular webservice request or response.

Equipment model database 22 stores information relating to various equipment. For each model, a number of metadata relationships may be defined and maintained. The metadata relationships may be between such factors of the vehicle as symptoms, test procedures, repairs, parts, and applicable reference documents. The DSS may be configured through these metadata models (incorporating the various relationships) for various vehicle equipment. The DSS core module 12 may then identify applicable model details based on given parameters, and extract the data from the equipment model database 22 accordingly. Equipment model database 22 may be developed based on engineering data library 26 and troubleshooting references. The troubleshooting references may be captured based on technical documentation available in applicable technical publications library 24.

The DSS core module 12 may be further adapted to validate a uniqueness of a parameter vector containing an applicable fault code of the vehicle, download a timestamp of an applicable file, and cross reference applicable equipment model and type against an applicable metadata relationship before creating a new workplan based on a received request. Requests may be received originally from a webservice consumer. Communication between the webservice consumer and the core module 12 may be facilitated by the service provider 28. Service provider 28 is shown loosely connected to the enterprise service bus (ESB) 30, which in turn is loosely connected to various service functionality, such as portal services 32, admin services 34, and other services (n) 36. As previously described, the ESB may be loosely connected to a number of webservice-compliant applications and functions (either internally or externally), so long as they are compliant with the WDSL open communications standard. In one embodiment, the ESB 30 may be connected to vehicle systems providing sensor data and fault data through the service provider 28 to the DSS core module 12.

DSS core module 12 may provide document references for a recommended set of isolation procedures or repair procedures while creating a new workplan for a received webservice request. Maintenance personnel may access the link from a user interface, and download the document references from the architecture 10.

DSS core module 12 may provide a ranked list of tests and repairs procedures for each classified fault condition of the vehicle. DSS core module 12 may provide the recommended repairs and test procedures in the decreasing order of probability of successfully resolving a vehicle problem or issue.

The ranking described above may be based on either feedback that a user could provide on the success or failure of an applicable workplan action, the number of times that the procedures are used, or based on other factors such as cost, severity and time required to perform an action.

Each workplan created by the DSS core module 12 may be configured to be uniquely identifiable. The workplan identifier may then be used in the future for the DSS core module to retrieve an existing workplan based on a webservice request. A logger facility may be implemented to track internal operations including errors and exceptions. The architecture 10 may be configured to track such operations to a centralized system where all ESB -based system messages may be logged. Such messages may also be stored on the DSS core module 12, the equipment model database 22, or elsewhere.

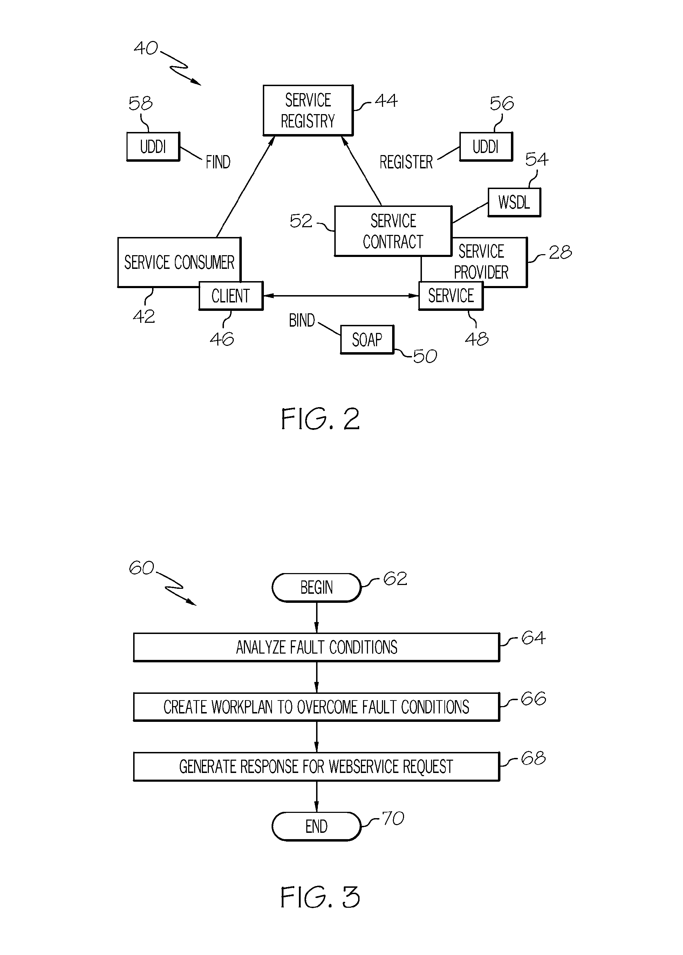

Turning to FIG. 2, exemplary communications interaction 40 between a webservice architecture and service-oriented architecture (SOA) is illustrated. A service consumer in communication with a user, such as a vehicle maintainer, is shown in communication between a service registry 44 and the webservice provider 28. A client 46 is operational on the service consumer 42, in communication with the applicable service 48 operational on the service provider 28. The client 46 and service 48 interact by use of a simple object access protocol (SOAP), the functionality of which will be further described, following.

A services contract 52 is generated by the service provider, and is discovered and registered on the service registry 44 using a universal description, discovery, and integration (UDDI) 56,58 open standard. The service contract is compliant with a web service description language (WDSL) 54 definitional open standard.

Webservice architecture 10 (FIG. 1) may be configured with specifications such as SOAP, WSDL, and UDDI that support the interaction of a webservice requester with a webservice provider. Service consumer 42 may be an application, service, or some other type of software module that requires a service. It is the entity that initiates the locating of the service in the registry, binding to the service over a transport, and executing the service function. The service consumer 42 executes the service by sending it as a request formatted according to the service contract 52.

Service provider 28 is the service, the network-addressable entity that accepts and executes requests from service consumers 42. It may be a mainframe system, a component, or some other type of software system that executes the service request. The service provider publishes its contract in the registry for access by service consumers 42.

Service registry 44 is a network-based directory that contains available services. It is an entity that accepts and stores contracts from service providers and provides those contracts to interested service consumers. SOAP 50 is an extensible markup language (XML)-based messaging protocol that is independent of any specific transport protocol. SOAP defines a framework within which messages contain headers, which are used to control the behavior of SOAP-enabled middleware, and a message body.

WSDL 54 is an XML-based interface definition language that separates function from implementation, and enables design by contract as recommended by SOA. WSDL enables development tooling and middleware for any platform and language to understand service operations and invocation mechanisms. For example, given the WSDL interface to a service that is implemented in Java, running in a WebSphere environment, and offering invocation through HTTP, a developer working in the Microsoft® .Net platform can import the WSDL and easily generate application code to invoke the service. As with SOAP headers, the WSDL specification is extensible and provides for additional aspects of service interactions to be specified, such as security and transactionality.

UDDI 56 servers act as a directory of available services and service providers. SOAP 50 can be used to query UDDI 56 to find the locations of WSDL 54 definitions of services, or the search can be performed through a user interface at design or development time.

The communications interaction 40 may be compliant with a webservices-reliable (WS-Reliable) messaging specification. WS-Reliable Messaging specification defines a protocol for reliable communication (including SOAP messages) that uses a variety of communication technologies. For example, SOAP messaging is supported through the JMS API to WebSphere MQ by WebSphere MQ, the Web Services Gateway, and WebSphere Business Integration Server Foundation. The provider typically publishes a WSDL description of its web service and the requester access the description using UDDI or other type of registry and requests the execution of the provider's service by sending a SOAP message to it.

As shown in FIG. 1, previously, and here in FIG. 2, a variety of functionality may be implemented by a webservice architecture. A business document or an interface control document may be defined to be exchanged using XML and XML schemas. Service contracts may be defined using WDSL for interface metadata and the WS_policy family of standards for policy metadata. UDDI may be employed to register and discover a particular service. Multiple interaction patterns may be supported. Additional qualities may be provided using WS-Reliable messaging and WS-Eventing. Data may be exchanged using SOAP as the message format and hyper text transport protocol (HTTP) as the transport protocol.

Use of webservice communications such as the interaction 40 provides a standardized way of integrating applications using the XML, SOAP, WSDL, and UDDI open standards over an Internet protocol backbone. XML may be used to tag data, SOAP may be used to transfer the data, WSDL may be used for describing the services available, and UDDI may be used for listing what services are available. Webservice communications allow software or organizations to communicate data without intimate knowledge of each other's information technology (IT) systems behind the firewall.

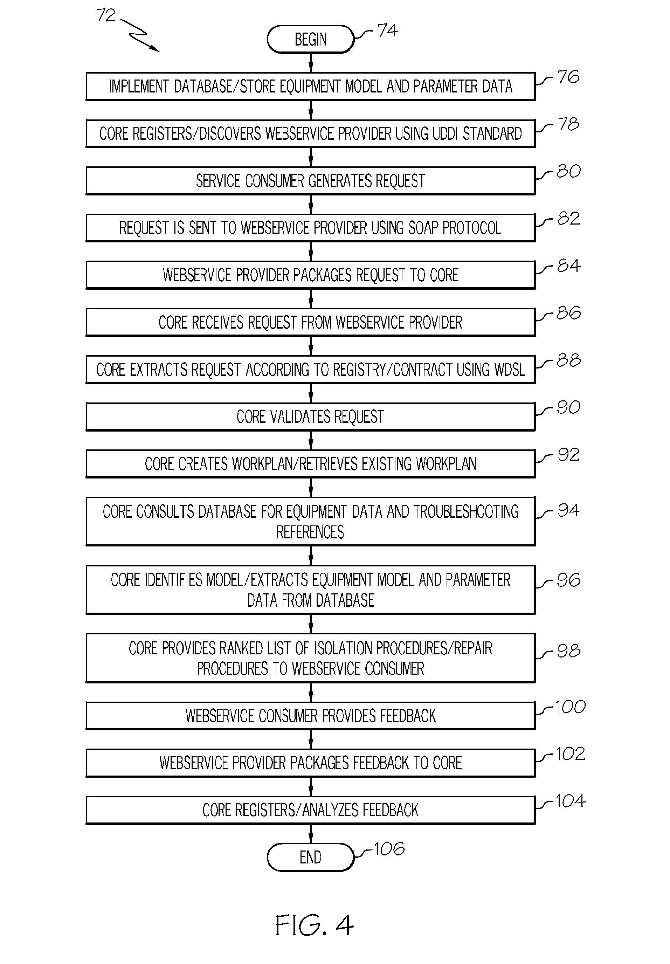

FIGs. 3 and 4, following, illustrate exemplary methods of aspects of implementation and operation of a webservice architecture and service oriented architecture for vehicle health maintenance. As one skilled in the art will appreciate, various steps in the methods may be implemented in differing ways to suit a particular application. For example, various steps in the methods may be omitted, modified, or may be carried out in differing orders. In addition, various steps may be implemented by differing means, such as by hardware, firmware, or software, or a combination thereof operational on, or associated with, the webservice architecture. For example, the methods may be embodied in computer program products, such as digital versatile discs (DVDs) compact discs (CDs) or other storage media. The computer program products may include computer readable program code having executable portions for performing various steps as illustrated in the following methods.

FIG. 3, following, illustrates an exemplary method 60 of configuring a service oriented architecture (SOA) for operation. A DSS core module is implemented in a webservice architecture such as exemplary architecture 10 shown in FIG. 1, previously. The DSS core module may be configured to perform the following operations. Method 60 begins (step 62) by analyzing fault conditions of the vehicle (step 64). A workplan is created to overcome the fault conditions (step 66). A response is generated based on the workplan for the webservice request (step 68). The method 60 then ends (step 70).

FIG. 4, following, illustrates an exemplary method 72 of operation of a webservice architecture for vehicle health maintenance, such as the exemplary architecture 10 of FIG. 1. Method 72 begins (step 74) with the implementation of a database. Equipment model and parameter data is stored on the database (step 76). As a next step, the DSS core, in conjunction with various subcomponents as previously described, discovers and registers a webservice provider using the UDDI open standard (step 78). A service consumer generates a request (step 80). The request is sent to the webservice provider from the service consumer client using the SOAP protocol (step 82). The webservice provider packages the request and forwards the request to the DSS core module (step 84).

The DSS core module receives the request from the webservice provider (step 86). The core extracts the request according to the registry/service contract using the WDSL open standard (step 88). The core validates the request (step 90). The core creates a new workplan or consults an existing workplan based on the request (step 92).

Once the workplan is created or retrieved, the core consults the database for related equipment data and troubleshooting references (step 94). The core identifies the applicable equipment model, and extracts equipment model and parameter data from the database (step 96). The core then provides a ranked list of isolation procedures/repair procedures to the webservice provider, which is then forwarded to the client of the webservice consumer (step 98).

A user, such as a maintenance professional, provides feedback through the webservice consumer client to the DSS (step 100). The webservice provider packages the feedback and forwards the feedback to the DSS core (step 102). The core registers/stores the feedback, and analyzes the feedback for future use (such as reordering procedures or prioritization) (step 104). The method 72 then ends (step 106).

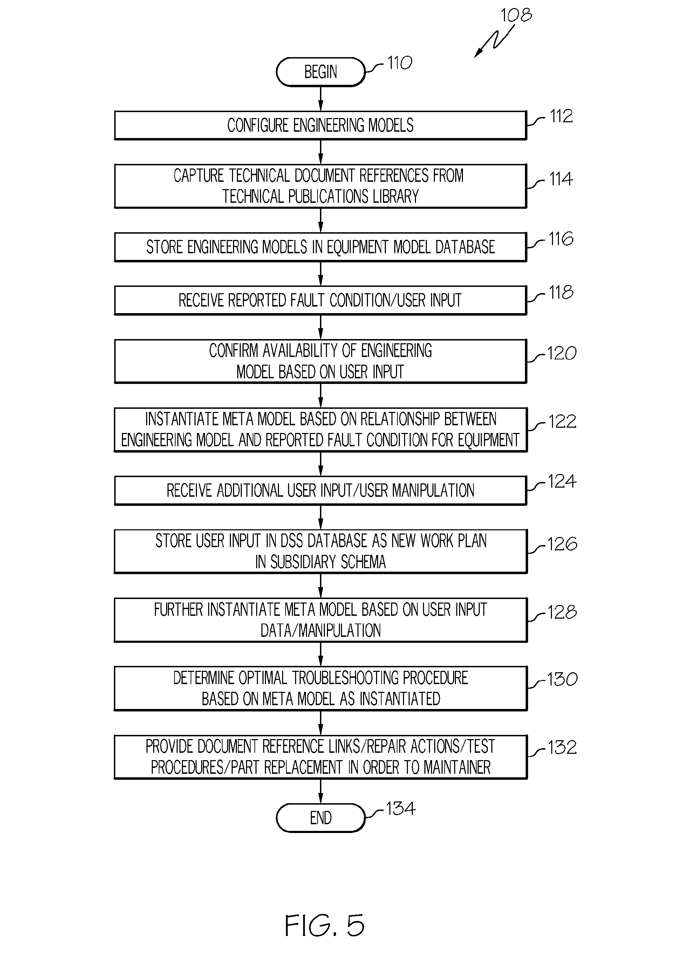

FIG. 5 illustrates an exemplary method 108 for providing troubleshooting (test procedures, repair actions, part replacement) to a maintenance professional using a DSS. The DSS may incorporate the webservice architecture as shown in FIG. 1. Method 108 begins (step 110) with the configuration of a number of engineering models (step 112). The engineering models may be created and stored, in one embodiment, on the equipment model database 22 (FIG. 1). The DSS maintains an engineering model for every equipment, including all possible failure scenarios and related symptoms to support the troubleshooting functionality. In one embodiment, the engineering models may be adapted to be read only (reference) data for the DSS to refer to an analyze failure conditions in a real-time environment.

Engineering data and technical publication data may be captured (such as technical document references) from a technical publications and engineering data libraries (step 114). The captured data may be incorporated into the engineering models, which are stored in the equipment model database (step 116). Each engineering model may internally contain one or more fault models that maintain a hierarchy of subsystems, faults, observations, test procedures, repairs, document references and part details. Accordingly, the captured data may be used in various aspects of the fault models as described.

In some embodiments, the same engineering model and/or fault model may be modeled by a common model. In other embodiments, the same engineering model and/or fault model may be reused if differing equipment follows the same engineering data.

A user, such as the maintenance professional, reports a fault condition, which is received (step 118). Based on the user input, the method then confirms an availability of a particular engineering model (step 120) relevant to the reported fault condition. A meta model, based on one or more relationships between the selected engineering model and the reported fault condition, is then instantiated (step 122). The meta model may embody a host of subsidiary DSS schemas which are identified for a particular fault condition. In one embodiment, the meta model may be instantiated by one or more of the DSS managers 16 (FIG. 1).

As soon as the user identifies one or more fault conditions and starts manipulating on the fault condition, every instance of the user's interaction with the DSS may be recorded on the system as a new work plan in a subsidiary schema of the DSS. Returning to method 108, the additional user input/manipulation is received (step 124). The additional user input may be stored in a DSS database as a new work plan in a subsidiary schema (step 126). In one embodiment, the metadata repository 14 (FIG. 1) may be adapted to store such additional user input relating to one or more reported fault conditions.

The DSS database may be adapted to form a "wrapper" over the equipment model database functionality. In other words, the DSS database may take up the meta model instantiation process based on the additional user input. The additional user input may include such activities as creating, closing, or reopening a particular work plan and/or a user feedback. Based on the additional user input, the meta model is further instantiated (step 128). Each meta model is first instantiated using equipment model/fault data. As user input/manipulation data is recorded, such data assists the DSS database in taking up the particular meta model and carrying the instantiation process forward.

The DSS core, utilizing one or more DSS managers, may then determine an optimal troubleshooting procedure based on the meta model as instantiated in its latest form (step 130). The optimal troubleshooting procedure may include test procedures, repair actions, part replacement information, and the like. As part of the troubleshooting providing functionality, the DSS may provide document reference links associated with the test procedures, repair actions, and part replacement information (step 132). The document reference links are gleaned from the technical publication and engineering data libraries (e.g., technical publications library 24 and/or engineering data library 26, FIG. 1). The method 108 then ends (step 134).

Some of the functional units described in this specification have been labeled as "modules" in order to more particularly emphasize their implementation independence. For example, functionality labeled as a module may be implemented wholly, or partially, as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices, or the like.

Modules may also be implemented in software for execution by various types of processors. An identified module of executable code may, for instance, comprise one or more physical or logical modules of computer instructions that may, for instance, be organized as an object, procedure, or function. Nevertheless, the executables of an identified module need not be physically located together, but may comprise disparate instructions stored in different locations that, when joined logically together, comprise the module and achieve the stated purpose for the module.

Indeed, a module of executable code may be a single instruction, or many instructions, and may even be distributed over several different code segments, among different programs, and across several memory devices. Similarly, operational data may be embodied in any suitable form and organized within any suitable type of data structure. The operational data may be collected as a single data set, or may be distributed over different locations including over different storage devices, and may exist, at least partially, merely as electronic signals on a system or network.

Reference throughout this specification to "one embodiment," "an embodiment," or similar language means that a particular feature, structure, or characteristic described in connection with the embodiment is included in at least one embodiment of the present invention. Thus, appearances of the phrases "in one embodiment," "in an embodiment," and similar language throughout this specification may, but do not necessarily, all refer to the same embodiment.

Furthermore, the described features, structures, or characteristics of the invention may be combined in any suitable manner in one or more embodiments. In the following description, numerous specific details are provided, such as examples of programming, software modules, user selections, network transactions, database queries, database structures, hardware modules, hardware circuits, hardware chips, etc., to provide a thorough understanding of embodiments of the invention. One skilled in the relevant art will recognize, however, that the invention may be practiced without one or more of the specific details, or with other methods, components, materials, and so forth. In other instances, well-known structures, materials, or operations are not shown or described in detail to avoid obscuring aspects of the invention.

While one or more embodiments of the present invention have been illustrated in detail, the skilled artisan will appreciate that modifications and adaptations to those embodiments may be made without departing from the scope of the present invention as set forth in the following claims.

## Claims

1. A service oriented architecture (SOA) based decision support system for a vehicle, comprising:
a database (22) for storing a workplan of the vehicle;
a webservice provider (28) in communication with the database (22) for integrating applications using a variety of open standards of an internet protocol backbone;
a core (12) connected between the database (22) and webservice provider (28), the core (12) adapted for:
analyzing fault conditions,
creating the workplan to overcome the fault conditions, and
generating a response for a webservice request; and
an enterprise service bus (30) connected to the webservice provider (28) for providing loose connectivity between webservice enabled functions, a service customer (42), and the core (12).

2. The system of claim 1, wherein the webservice enabled functions include at least one portal services (32) and admin services (34).

3. The system of claim 1, wherein the core (12) is further adapted for providing metadata, the metadata defining one of a capability and a constraint of the decision support system.

4. The system of claim 1, wherein the core (12) is further adapted for retrieving an existing workplan from the database (22).

5. The system of claim 1, wherein the core (12) is further adapted for:
collecting feedback from a user through the enterprise service bus (30), and
storing the feedback on the database (22) for future analysis.

6. A method for implementing a service oriented architecture (SOA) based decision support system for a vehicle, comprising:
configuring a database (22) for storing a workplan of the vehicle;
configuring a webservice provider (28) in communication with the database (22) for integrating applications using a variety of open standards of an internet protocol backbone;
configuring a core (12) connected between the database (22) and webservice provider (28), the core (12) adapted for:
analyzing fault conditions,
creating the workplan to overcome the fault conditions, and
generating a response for a webservice request; and
configuring a enterprise service bus (30) connected to the webservice provider (28) for providing loose connectivity between webservice enabled functions, a service customer (42), and the core (12).

7. The method of claim 6, wherein configuring an enterprise service bus (30) connected to the webservice provider (28) for providing loose connectivity between webservice enabled functions, a service customer (42), and the core (12) includes providing loose connectivity between the enterprise service bus (30) and at least one portal services (32) and admin services (34).

8. The method of claim 6, wherein configuring a core (12) connected between the database (22) and webservice provider (28) includes adapting the core (12) for providing metadata defining one of a capability and a constraint of the decision support system.

9. The method of claim 6, wherein configuring a core (12) connected between the database (22) and webservice provider (28) includes adapting the core (12) for retrieving an existing workplan from the database (22).

10. The method of claim 6, wherein configuring a core (12) connected between the database (22) and webservice provider (28) includes adapting the core (12) for:
collecting feedback from a user through the enterprise service bus (30), and
storing the feedback on the database (22) for future analysis.
